(19) Europäisches Patentamt
European Patent Office
Office européen des brevets

(11) Numéro de publication : **0 474 533 A1**

(12) # DEMANDE DE BREVET EUROPEEN

(21) Numéro de dépôt : **91402281.9**

(51) Int. Cl.$^5$ : **B05D 1/12,** B01D 69/12

(22) Date de dépôt : **21.08.91**

(30) Priorité : **23.08.90 FR 9010597**

(43) Date de publication de la demande :
**11.03.92 Bulletin 92/11**

(84) Etats contractants désignés :
**DE FR GB NL**

(71) Demandeur : **COMMISSARIAT A L'ENERGIE ATOMIQUE**
**31-33, rue de la Fédération**
**F-75015 Paris (FR)**

(72) Inventeur : **Barraud, André**
**4, avenue des Clozeaux**
**F-91440 Bures sur Yvette (FR)**
Inventeur : **Palacin, Serge**
**8, rue des Arcades**
**F-78180 Montigny-Le-Bretonneux (FR)**
Inventeur : **Porteu, Florence**
**134, rue du Faubourg Saint Martin**
**F-75010 Paris (FR)**
Inventeur : **Ruaudel, Annie**
**14, Allée des Fondaisons**
**F-91370 Verrières le Buisson (FR)**

(74) Mandataire : **Mongrédien, André et al**
**c/o BREVATOME 25, rue de Ponthieu**
**F-75008 Paris (FR)**

(54) **Membranes organiques bidimensionnelles et leurs procédés de préparation.**

(57) L'invention concerne des membranes organiques bidimensionnelles et leurs procédés de préparation.

Ces membranes comprennent au moins une couche monomoléculaire de molécules organiques A telles que des porphyrines, phtalocyanines et porphyrazines. Dans une couche, chaque molécule A est liée directement ou indirectement à n (n≧3) molécules identiques A par n liaisons disposées symétriquement par rapport au centre de la molécule A.

Ces membranes ont ainsi des propriétés physiques à l'échelle microscopique qui sont identiques dans au moins deux directions du plan de la membrane.

Elles peuvent être utilisées comme membranes conductrices.

EP 0 474 533 A1

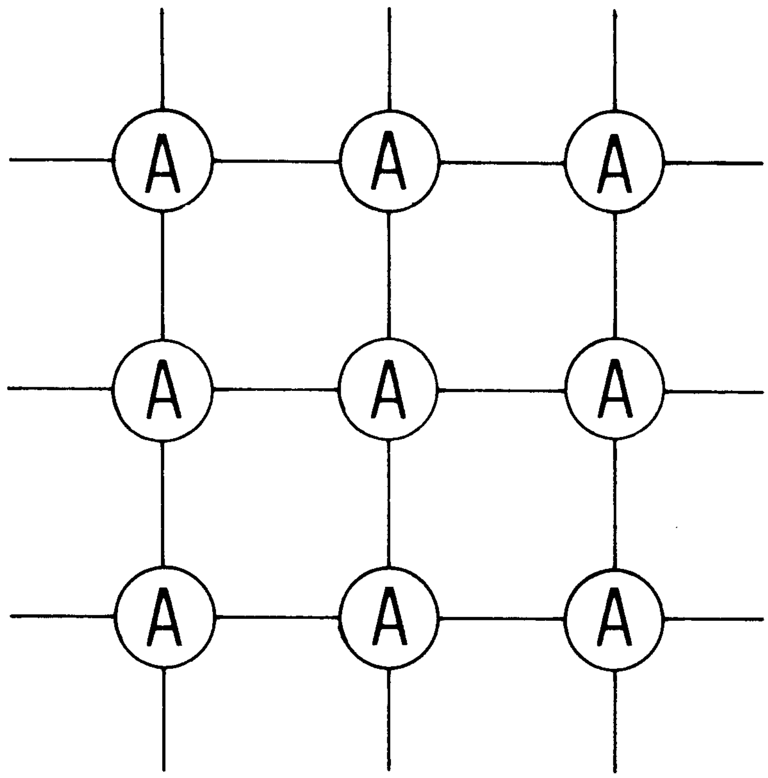


FIG. 1

La présente invention a pour objet des membranes organiques constituées d'au moins une couche mince organisée, ayant des propriétés particulières qui les rendent intéressantes dans de nombreux domaines.

De façon plus précise, elle concerne des membranes ultraminces qui présentent des propriétés physiques identiques à l'échelle microscopique dans au moins deux directions du plan de la membrane.

De telles membranes organiques peuvent être utilisées en particulier comme membrane ultramince autosupportée pour l'étude de la diffusion d'ions et la séparation d'espèces chimiques en milieu gazeux ou liquide, comme membrane de protection hydrophobe, tenace, insoluble et invisible pour protéger divers substrats contre la corrosion, l'oxydation, les frottements etc., comme photo-résist, comme recouvrement pour masquer les défauts d'un substrat, ou encore comme membrane conductrice de l'électricité.

Les membranes minces organiques connues actuellement sont constituées de polymères éventuellement réticulés, c'est-à-dire de chaînes de polymère linéaire reliées éventuellement entre elles par des liaisons transversales distribuées au hasard. Du fait de l'absence ou de la répartition au hasard des liaisons transversales entre chaînes, ces membranes présentent des propriétés physiques qui diffèrent à l'échelle microscopique lorsqu'on passe de la direction qui correspond au sens des chaînes à d'autres directions.

La présente invention a précisément pour objet une membrane organique, ayant sensiblement la structure d'un polymère, dans lequel les molécules qui correspondent aux unités monomères du polymère sont reliées entre elles de façon à former un réseau organisé, ce qui confère à la membrane des propriétés physiques identiques à l'échelle microscopique dans au moins deux directions du plan de la membrane.

Selon l'invention, la membrane comprend au moins une couche monomoléculaire de molécules organiques et elle se caractérise en ce que chaque molécule organique de la couche monomoléculaire est liée à n molécules identiques de la même couche, n étant un nombre entier au moins égal à 3, par n liaisons chimiques directes ou par n liaisons chimiques indirectes comportant chacune un ion bivalent, et en ce que les n liaisons chimiques entre une molécule centrale et les n molécules adjacentes sont disposées sensiblement symétriquement par rapport au centre de la molécule centrale.

Ainsi, la membrane de l'invention présente une structure très organisée puisque dans chaque couche monomoléculaire, chaque molécule est entourée par n molécules identiques auxquelles elle est liée, ces n molécules étant réparties symétriquement autour de la molécule centrale.

De préférence, dans l'invention, les molécules organiques sont des molécules macrocycliques comportant des groupes polaires qui sont adaptées à la formation de couches monomoléculaires.

A titre d'exemple de molécules macrocycliques, on peut citer les phtalocyanines et les porphyrines.

Selon un premier mode de réalisation de la membrane de l'invention, les n liaisons chimiques sont des liaisons chimiques directes telles que des liaisons covalentes.

Selon un second mode de réalisation de la membrane de l'invention, les n liaisons chimiques sont des liaisons chimiques indirectes entre une première molécule de la couche et une seconde molécule adjacente de la couche et chaque liaison chimique indirecte comprend une première liaison ionique entre la première molécule et un ion bivalent et une seconde liaison ionique entre cet ion bivalent et la seconde molécule.

Selon une variante de l'invention, la membrane organique est constituée de molécules différentes. Dans ce cas, chaque couche monomoléculaire est constituée de molécules A et B, chaque molécule A étant liée chimiquement à n molécules B, n étant un nombre entier au moins égal à 3, et chaque molécule B étant liée chimiquement à n molécules A, les n liaisons entre une molécule A et les n molécules B qui l'entourent étant disposées symétriquement par rapport au centre de la molécule A et les n liaisons entre une molécule B et les n molécules A qui l'entourent étant disposées symétriquement par rapport au centre de la molécule B.

Les liaisons entre les molécules A et B peuvent être en particulier des liaisons ioniques.

Les membranes de l'invention peuvent être réalisées à partir de molécules identiques ou différentes comportant n fonctions polymérisables ou n fonctions réactives réparties symétriquement autour du centre de la molécule.

Aussi, l'invention a également pour objet un procédé de préparation des membranes organiques précitées, qui consiste à préparer au moins une couche monomoléculaire de molécules identiques ou différentes comportant chacune n fonctions polymérisables ou n fonctions réactives et à polymériser ou faire réagir entre elles ces molécules au sein de la couche, soit avant dépôt, soit après dépôt de celle-ci sur un support approprié.

D'autres caractéristiques et avantages de l'invention apparaitront mieux à la lecture de la description qui suit, donnée bien entendu à titre illustratif et non limitatif, en référence au dessin annexé sur lequel :

- la figure 1 représente de façon schématique la structure d'une couche monomoléculaire formée de molécules identiques A réunies par des liaisons covalentes ;
- la figure 2 représente schématiquement la structure d'une couche monomoléculaire formée de molélcules identiques A comportant 4 charges négatives réparties symétriquement autour de la molécule A et associées entre elles par l'intermédiaire d'ions bivalents $M^{2+}$ ;
- la figure 3 représente de façon schématique la structure d'une couche monomoléculaire formée de molécules A et B ayant chacune 4 charges de signes opposés ; et

– les figures 4 à 6 représentent les formules de molécules utilisables dans l'invention.

Selon l'invention, les molécules organiques utilisées dans l'invention, sont des molécules convenant à la réalisation de couches monomoléculaires.

Une technique connue pour réaliser des couches monomoléculaires est la technique de Langmuir Blodgett qui utilise des molécules "amphiphiles" ou "amphiphatiques".

On rappelle que les molécules "amphiphiles" ou "amphiphatiques" sont des molécules organiques possédant une partie hydrophobe, c'est-à-dire une partie ayant une répulsion pour les liquides polaires tels que l'eau, et une partie hydrophile, c'est-à-dire une partie ayant une affinité pour les liquides polaires tels que l'eau.

Grâce à ces caractéristiques particulières, lorsque l'on introduit des molécules amphiphiles sur la surface d'un liquide tel que l'eau, les molécules s'étalent à la surface du liquide et elles s'orientent de façon que leur partie hydrophile plonge dans l'eau, tandis que leur partie hydrophobe, généralement constituée par une longue chaîne hydrocarbonée, tend à s'en écarter de sorte que l'axe de la chaîne devient perpendiculaire à la surface de l'eau. Si les forces de cohésion entre molécules sont suffisantes, ces molécules restent groupées et limitent leur étalement à un film monomoléculaire continu ayant sensiblement l'épaisseur d'une molécule, ce qui correspond à une couche monomoléculaire ou film de Langmuir. De tels films peuvent être manipulés sur la surface de l'eau, puis déposés sur un support solide après avoir été comprimés sous une pression superficielle appropriée, selon la méthode connue de Langmuir Blodgett décrite dans J. of Am. Chem. Soc., vol. 57 (1935) p. 1007-1010.

Une autre technique connue pour former des couches monomoléculaires est la technique d'adsorption à partir d'une solution de molécules, par exemple sur du silicium oxydé.

Dans la membrane de l'invention, on utilise de préférence des molécules déposables par la technique de Langmuir Blodgett, soit des molécules amphiphiles ou des molécules comportant des groupements fortement hydrophiles qui peuvent être associés, par exemple par des liaisons ioniques, à des anions ou des cations comportant une longue chaîne hydrophobe.

A titre d'exemples de molécules utilisables dans l'invention, on peut citer les molécules macrocycliques du type phtalocyanines, porphyrines et porphyrazines, comportant des substituants formés de longues chaînes hydrophobes, ou ces mêmes molécules sous la forme de cations associés à des anions à longue chaîne hydrophobe.

On peut encore utiliser dans l'invention des molécules non amphiphiles, par exemple du type phtalocyanine, porphyrine ou porphyrazine, en les complexant avec d'autres molécules amphiphiles comme il est décrit dans le document FR-A-2 564 004 pour les déposer sous la forme de couche monomoléculaire sur la surface d'un liquide.

Dans ce cas, après dépôt et polymérisation de la couche pour lier les molécules non amphiphiles entre elles, on peut extraire les molécules amphiphiles associées aux molécules non amphiphiles par un traitement de solubilisation approprié afin d'obtenir une membrane constituée uniquement d'un polymère réticulé de molécules non amphiphiles.

Ainsi, lorsque les molécules sont constituées d'un cation non amphiphile portant n fonctions polymérisables et d'un anion amphiphile comportant au moins une chaîne hydrophobe, on élimine les anions amphiphiles à chaîne hydrophobe, après polymérisation des cations de la couche monomoléculaire.

Ceci peut être effectué en détruisant les liaisons ioniques entre ces anions et les molécules non amphiphiles par action d'un acide inorganique tel que l'acide chlorhydrique ; ainsi, on remplace l'anion à longue chaîne hydrophobe par l'anion de l'acide utilisé, par exemple $Cl^-$, puis on élimine l'anion à longue chaîne hydrophobe par dissolution dans un solvant organique approprié.

En effet, les molécules amphiphiles polymérisées et réticulées grâce aux liaisons établies dans les n directions du plan de la couche sont insolubles dans l'eau et dans les solvants organiques.

Les films obtenus de cette façon qui sont dépourvus de chaînes hydrophobes, sont intéressants en tant que matériaux laissant passer le courant tunnel, utilisables par exemple dans des diodes hyperfréquence, pour l'affichage ou pour l'émission électronique froide.

Les molécules utilisées dans l'invention doivent comporter n fonctions polymérisables ou n fonctions réactives susceptibles de former des liaisons ioniques ou des liaisons covalentes, soit directement avec les molécules organiques de la couche, soit indirectement par l'intermédiaire d'ions bivalents.

Selon l'invention, n est au moins égal à 3 et peut prendre par exemple des valeurs allant de 3 à 6 . Généralement, n est égal à 3 ou 4.

Sur la figure 1 on a représenté le premier mode de réalisation de l'invention dans lequel chaque couche de la membrane est formée de molécules identiques A réunies entre elles par des liaisons directes covalentes.

Une telle structure peut être préparée en préparant et déposant sur un substrat au moins une couche monomoléculaire des molécules A comportant chacune n fonctions polymérisables, n étant un nombre entier au

moins égal à 3, et en polymérisant les molécules de la ou des couches pour les relier chimiquement entre elles par l'intermédiaire de ces n fonctions.

Les fonctions polymérisables des molécules peuvent être de différents types. Généralement, on préfère des fonctions qui n'exigent pas pour leur polymérisation des conditions sévères de température ou autres afin de ne pas dégrader l'organisation de la membrane en couche monomoléculaire. A titre d'exemple, on peut utiliser des fonctions éthyléniquement ou acétyléniquement insaturées.

Ainsi, les molécules à insaturation éthylénique susceptibles d'être utilisées dans ce premier mode de réalisation de l'invention sont par exemple les esters insaturés du pentaérythritol répondant à la formule suivante :

$$\begin{array}{rl} & CH_2OOC-(CH_2)_p-CH=CH_2 \\ & \vert \\ CH_2=CH-(CH_2)_p-COOH_2C- & C-CH_2OOC-(CH_2)_p-CH=CH_2 \qquad (I) \\ & \vert \\ & CH_2OOC-(CH_2)_p-CH=CH_2 \end{array}$$

dans laquelle p est un nombre entier allant de 14 à 26,ainsi que les sels d'ammonium quaternaire des acides ω-alkylénoïques de formule

$$CH_2=CH-(CH_2)_p-C00H$$

dans laquelle p est un nombre entier allant de 14 à 26.

Des molécules à insaturation acétylénique utilisables dans ce premier mode de réalisation de l'invention peuvent être par exemple des sels de tétra N-(propyne-2 yle)pyridynium porphyrine.

Les exemples 1 à 5 qui suivent, illustrent la réalisation de membranes organiques conformes au premier mode de réalisation de l'invention avec n égal à 4.

**Exemple 1.**

Dans cet exemple, on utilise comme molécules organiques l'ester ω-tricosénoïque du pentaérythritol (PEOM1), soit le composé de formule (I) dans laquelle p=20.

Dans cet exemple, on utilise la technique de Langmuir-Blodgett pour préparer chaque couche monomoléculaire sur la surface d'une cuve remplie d'eau.

On forme ainsi sur la surface de la cuve une couche monomoléculaire de l'ester ω-tricosénoïque du pentaérythritol, puis on comprime la couche monomoléculaire sous une pression de 28mN/m et on la dépose sur un substrat en silicium qui a été préalablement recouvert de 5 couches monomoléculaires d'acide béhénique.

On recommence ensuite ces opérations pour déposer successivement 15 couches de PEOM 1 sur le substrat, puis on irradie les couches déposées sur le substrat à travers un masque au moyen d'un faisceau d'électrons accélérés à 5kV en utilisant une dose d'irradiation de $1\mu C/cm^2$, ce qui conduit à une membrane organique insoluble.

On plonge alors le substrat recouvert de la membrane dans l'éthanol, ce qui dissout les couches d'acide béhénique sous-jacentes et les endroits non polymérisés protégés par le masque. La membrane polymérisée est ainsi décollée du substrat et flotte alors dans le méthanol. On récupère donc des morceaux de membrane polymérisée, de taille et de forme correspondant aux trous du masque d'irradiation. Ces morceaux sont récupérés et on vérifie qu'ils présentent bien la structure représentée sur la figure 1 en les examinant par spectrométrie d'absorption UV-visible et infrarouge.

**Exemple 2.**

Dans cet exemple, on utilise également l'ester ω-tricosénoïque du pentaérythritol de formule (I) avec n=20 pour former une membrane organique.

Dans cet exemple, on suit le même mode opératoire que dans l'exemple 1 pour déposer, sur un substrat qui a été revêtu tout d'abord d'un film d'aluminium d'une épaisseur de 60nm (600Å) par évaporation sous vide, 15 couches monomoléculaires de PEOM 1 que l'on soumet ensuite à un faisceau d'électrons accélérés à 5kV avec une dose totale de $1\mu C/cm^2$.

Après polymérisation, on immerge le substrat ainsi traité dans de l'éthanol qui dissout la partie non irradiée de la membrane et ne décolle pas la membrane polymérisée qui sert alors de résist de protection en vue d'une gravure de l'aluminium par plasma. On réalise ensuite l'attaque par plasma et on constate que la gravure est sélective et n'attaque que l'aluminium non protégé qui disparait entièrement sans que les parties du film d'aluminium protégées par la membrane soient touchées.

**Exemple 3.**

Les molécules utilisées dans cet exemple sont des molécules de dihexadécyl phosphate de tétra-N-(propyne-2yle)tétrapyridyniumporphyrine répondant à la formule (II) de la figure 4 annexée.

Dans ce cas, la molécule de base qui comporte quatre fonctions acétyléniques polymérisables symétriques, est une molécule qui ne peut former directement une couche monomoléculaire sur la surface de l'eau. Pour la rendre amphiphile, on la couple au dihexadécylphosphate qui comporte deux longues chaînes hydrophobes de 16 atomes de carbone.

On prépare tout d'abord la tétra-3-pyridyl porphyrine par réaction de 3-pyridylcarboxaldéhyde avec du pyrrole dans de l'acide propionique. On la purifie ensuite dans le méthanol dans lequel elle est insoluble, puis on la recristallise dans un mélange de méthanol et de chloroforme pour obtenir un produit pur.

On quaternise ensuite la tétra-3-pyridyl porphyrine en la portant au reflux pendant 15h avec un large excès de bromure de propyne-2 yle dans du diméthylformamide. Le sel quaternaire est insoluble dans l'éther chaud qui extrait la tétra-3-pyridylporphyrine et le bromure n'ayant pas réagi. On dissout alors cette porphyrine dans de l'eau et on place cette solution aqueuse dans une cuve de Langmuir.

On introduit alors sur la surface de la cuve l'acide dihexadécyl phosphorique qui s'étale sur la solution aqueuse pour former une couche monomoléculaire. Les molécules de porphyrine dissoutes dans la solution aqueuse sont attirées par les groupes phosphate et forment à l'interface une couche monomoléculaire très fluide qui peut être transférée sous une pression de 40mN/m sur un substrat de fluorine optiquement transparent.

On dépose ainsi 21 couches de dihexadécyl phosphate de tétra-N(propyne-2-yle)pyridynium porphyrine. On plonge ensuite ce substrat pendant quelques heures dans du nitrate d'argent ammoniacal. On obtient ainsi un polyacétylure d'argent qui est insoluble dans le chloroforme, mais peut être dégradé en milieu acide.

**Exemple 4.**

Dans cet exemple, on utilise les mêmes molécules que dans l'exemple 3, mais après formation d'une couche monomoléculaire sur la surface de la cuve, on polymérise cette couche par remplacement progressif de la solution aqueuse par une solution aqueuse contenant des ions $Ag^+$. On obtient ainsi sur la surface de l'eau une couche monomoléculaire polymérisée, très résistante que l'on peut transférer sur un substrat, par exemple pour recouvrir un substrat poreux.

Cette membrane peut être utilisée pour lisser des substrats ou comme barrière à perméabilité contrôlée pour la séparation de gaz ou de petites molécules en solution. Cette membrane est insoluble dans le chloroforme.

**Exemple 5.**

Dans cet exemple, on utilise les mêmes molécules que dans les exemples 3 et 4, en opérant comme dans l'exemple 4, mais en réalisant la polymérisation de la couche monomoléculaire à la surface de la cuve par remplacement progressif de la solution aqueuse par une solution de chlorure cuivreux/chlorure cuivrique ammoniacal qui effectue un couplage oxydant.

Le polymère diacétylénique résultant qui est très résistant mécaniquement est alors transféré sous une pression de 45mN/m sur un substrat de quartz isolant. On superpose ainsi sur le substrat 101 couches monomoléculaires polymérisées et on constate que la membrane ainsi réalisée a une faible conductibilité électrique (de l'ordre de $10^{-6}S.cm^{-1}$).

Ainsi, la structure organisée de la membrane permet d'obtenir une conductivité électrique sans dopage du polymère.

On peut ensuite extraire les chaînes d'acide dihexadécylphosphorique associées au polymère diacétylénique par dissolution de celles-ci dans du chloroforme, après avoir traité pendant quelques secondes la membrane par des vapeurs d'acide chlorhydrique qui détruit les liaisons ioniques entre les molécules d'acide dihexadécylphosphorique et de porphyrine, et remplace l'anion dihexadécylphosphorique par l'anion $Cl^-$.

Ainsi, on obtient des films de polyporphyrine thermiquement stables et d'épaisseur très faible convenant comme matériau laissant passer le courant par effet tunnel.

Sur la figure 2, on a représenté le second mode de réalisation de l'invention dans lequel des molécules identiques A ayant chacune 4 charges négatives réparties symétriquement autour de leur centre sont reliées entre elles par des ions bivalents $M^{2+}$ porteurs de 2 charges positives.

Des molécules susceptibles de convenir dans ce second mode de réalisation sont par exemple des molécules amphiphiles comportant n fonctions acides.

Bien entendu, on peut aussi utiliser dans ce second mode des molécules amphiphiles comportant n charges positives et un anion bivalent.

Pour réaliser la membrane, on peut utiliser un procédé comprenant les étapes suivantes :

a) préparer une couche monoléculaire de molécules amphiphiles comportant n charges positives ou négatives, n étant un nombre entier au moins égal à 3, en utilisant pour former la couche un liquide contenant en solution un ion bivalent de charge opposée à celles des molécules amphiphiles de façon à lier entre elles ces molécules par l'intermédiaire de ces ions bivalents, et

b) transférer la couche monomoléculaire ainsi constituée sur un substrat.

A titre d'exemple, chaque couche peut être formée d'un sel alcalino-terreux de la tétra-4-oxy(2-octadécanoïque acide)phényl porphyrine.

L'exemple 6 illustre la réalisation d'une telle membrane dans le cas où n est égal à 4.

**Exemple 6.**

Dans cet exemple, on utilise comme molécule amphiphile une tétraphénylporphyrine amphiphile comportant 4 groupes COOH et 4 chaînes hydrophobes de 18 atomes de carbone ayant la formule (III) de la figure 5 annexée dans laquelle le centre 0 est occupé par $H_2$, Cu ou Co/imidazole de formule :

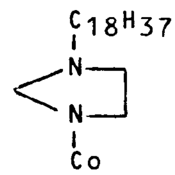

Ces molécules sont préparées de la façon suivante.

Tout d'abord, on prépare le 2-bromooctadécanoate d'éthyle par réaction d'acide octadécanoïque avec du $SOCl_2$ à 100°C pour former le chlorure d'acide correspondant que l'on fait réagir avec du brome à 60°C pendant 4h pour former le bromure de l'acide 2-bromooctadécanoïque. On fait réagir ensuite cet acide avec de l'alcool éthylique à la température ambiante pour former le 2-bromooctadécanoate d'éthyle. On utilise ensuite le 2-bromooctadécanoate d'éthyle pour préparer la tétra-4-oxy(2-octadécanoïque acide)phénylporphyrine.

Dans ce but, on fait réagir le 2-bromooctadécanoate d'éthyle avec de l'hydroxybenzaldéhyde en présence de potasse et d'alcool éthylique pendant 4h pour former l'aldéhyde de formule :

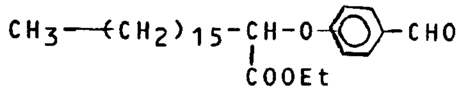

On fait ensuite réagir un équivalent de cet aldéhyde au reflux pendant 1h avec un équivalent de pyrrole dans de l'acide propionique. Après refroidissement, la solution acide est diluée avec de l'eau glacée et neutralisée par de l'ammoniaque.

On filtre alors le précipité brun, on le lave avec de l'eau, on l'extrait par de l'éther, on le sèche et on le distille sous vide. On obtient ainsi la tétraporphyrine sous forme d'ester éthylique. On saponifie le groupe ester dans de la potasse alcoolique, puis on neutralise par de l'acide chlorhydrique pour obtenir l'acide libre de formule (III).

On utilise alors cette molécule pour préparer une couche monomoléculaire sur la surface d'une cuve remplie d'eau contenant en solution du $BaCl_2$. Les molécules de formule (III) s'étalent sur la sur face du liquide de la cuve et les fonctions acides de deux molécules voisines sont pontées entre elles par les ions bivalents $Ba^{2+}$ présents dans l'eau de la cuve.

On comprime alors le film ainsi obtenu sous une pression de 40mN/m et on le transfère sur un substrat à une vitesse réduite (au plus égale à 0,5cm/min). La membrane ainsi transférée est insoluble dans le chloroforme.

On peut répéter ces opérations en utilisant la même porphyrine non pas sous forme de base libre, mais sous forme de complexe avec le cuivre ou de complexe avec la Co imidazole, et l'on obtient des résultats équivalents.

Sur la figure 3, on a représenté la variante de réalisation de la membrane de l'invention dans laquelle on utilise deux types de molécules A et B sous la forme d'ions portant n charges de signes opposés avec n=4.

Dans ce cas les liaisons entre les molécules A et B sont des liaisons ioniques.

Les molécules A peuvent être des tétraphénylporphyrines comportant 4 substituants $COO^-$, par exemple les molécules de formule (III) de l'exemple 6.

Les molécules B chargées positivement peuvent être des tétra N-alkyl pyridyniumporphyrine, par exemple, la tétra-3-octadécylpyridyniumporphyrine sous la forme de complexe avec $Fe_20$ qui répond à la formule (IV) de la figure 6 annexée.

On peut préparer une telle membrane par un procédé comprenant les étapes suivantes :

a) former sur la surface d'un liquide une couche monomoléculaire des molécules A et des molécules B, les molécules A possédant n charges négatives et les molécules B possédant n charges positives avec n étant un nombre entier au moins égal à 3, et

b) transférer la couche ainsi formée sur un substrat.

L'exemple 7 qui suit illustre la préparation d'une telle membrane à partir de molécules A de formule (III) et de molécules B de formule (IV).

## Exemple 7.

Les molécules B de formule (IV) sont préparées par réaction de tétra-3-pyridyl porphyrine avec du bromure d'octadécyle en suivant le même mode opératoire que dans l'exemple 3. Deux molécules de la porphyrine ainsi obtenue sont ensuite couplées par l'intermédiaire de deux atomes de fer et d'un atome d'oxygène comme représenté sur la formule.

On répand sur la surface aqueuse d'une cuve de Langmuir un mélange équimoléculaire des molécules A et des molécules B dans du chloroforme. On forme ainsi une couche moléculaire ayant la structure représentée sur la figure 3 à la surface de l'eau où il se forme des liaisons ioniques entre les molécules A qui ont quatre fonctions acides et les molécules B qui ont quatre fonctions basiques.

On comprime alors la couche sous une pression de 35mN/m et on la transfère sur un substrat en fluorine optiquement transparent. On dépose ainsi 101 couches monomoléculaires qui restent parfaitement transparentes. La membrane ainsi déposée est insoluble dans le chloroforme alors que les molécules composantes l'étaient.

On constate par résonance paramagnétique électronique anisotrope et dichroïsme linéaire dans l'ultraviolet visible que chaque couche de la membrane a la structure représentée sur la figure 3.

On obtient ainsi une protection hydrophobe du substrat de fluorine particulièrement résistante aux frottements et aux solvants.

## Revendications

1. Membrane comprenant au moins une couche monomoléculaire de molécules organiques, caractérisée en ce que, chaque molécule organique de la couche monomoléculaire est liée à n molécules identiques de la même couche, n étant un nombre entier au moins égal à 3, par n liaisons chimiques directes ou par n liaisons chimiques indirectes comportant chacune un ion bivalent, et en ce que les n liaisons chimiques entre une molécule centrale et les n molécules adjacentes sont disposées sensiblement symétriquement par rapport au centre de la molécule centrale.

2. Membrane selon la revendication 1, caractérisée en ce que les molécules sont des molécules macrocycliques.

3. Membrane selon la revendication 1, caractérisée en ce que les n liaisons chimiques directes sont des liaisons covalentes.

4. Membrane selon la revendication 3, caractérisée en ce que chaque couche est formée d'un polymère d'un ester ω-alkylénoïque du pentaérythritol de formule :

$$\begin{array}{l} \phantom{CH_2=CH-(CH_2)_p-COOH_2C-}CH_2OOC-(CH_2)_p-CH=CH_2 \\ \phantom{CH_2=CH-(CH_2)_p-COOH_2C-}| \\ CH_2=CH-(CH_2)_p-COOH_2C-C-CH_2OOC-(CH_2)_p-CH=CH_2 \qquad (I) \\ \phantom{CH_2=CH-(CH_2)_p-COOH_2C-}| \\ \phantom{CH_2=CH-(CH_2)_p-COOH_2C-}CH_2OOC-(CH_2)_p-CH=CH_2 \end{array}$$

dans laquelle p est un nombre entier allant de 14 à 26.

5. Membrane selon la revendication 4, caractérisée en ce que p = 20.

6. Membrane selon la revendication 3, caractérisée en ce que chaque couche est formée d'un polymère d'un sel d'ammonium quaternaire d'un acide ω-alkylénoïque.

7. Membrane selon l'une quelconque des revendications 1 et 2, caractérisée en ce que les liaisons chimiques indirectes entre une première molécule de la couche et une seconde molécule adjacente de la couche comprennent chacune une première liaison ionique entre la première molécule et un ion bivalent et une seconde liaison ionique entre cet ion bivalent et la seconde molécule.

8. Membrane selon la revendication 7, caractérisée en ce que chaque couche est formée d'un sel alcalino-terreux de la tétra-4-oxy(2-octadécanoïque acide)phénylporphyrine.

9. Membrane selon la revendication 1 ou 2, caractérisée en ce que chaque couche monomoléculaire est un polymère d'un sel de tétra N-(propyne-2yle)pyridiniumporphyrine.

10. Membrane selon la revendication 9, caractérisée en ce que le sel est un dialkyl phosphate de tétra N-(propyne-2yle)pyridyniumporphyrine.

11. Membrane selon la revendication 9, caractérisée en ce que le sel est un chlorure de tétra N-(propyne-2yle)pyridinium porphyrine.

12. Utilisation de la membrane selon la revendication 11 comme matériau laissant passer le courant tunnel.

13. Membrane comprenant au moins une couche monomoléculaire, caractérisée en ce que la couche monomoléculaire est constituée de molécules A et B, chaque molécule A étant liée chimiquement à n molécules B, n étant un nombre entier au moins égal à 3, et chaque molécule B étant liée chimiquement à n molécules A, les n liaisons entre une molécule A et les n molécules B qui l'entourent étant disposées symétriquement par rapport au centre de la molécule A et les n liaisons entre une molécule B et les n molécules A qui l'entourent étant disposées symétriquement par rapport au centre de la molécule B.

14. Membrane selon la revendication 13, caractérisée en ce que les liaisons entre les molécules A et B sont des liaisons ioniques.

15. Membrane selon la revendication 14, caractérisée en ce que la molécule A est une tétraphénylporphyrine comportant 4 substituants $COO^-$ et la molécule B est une N-alkyltétrapyridyniumporphyrine.

16. Membrane selon l'une quelconque des revendications 1 à 15, caractérisée en ce que n est égal à 3 ou 4.

17. Procédé de préparation d'une membrane selon l'une quelconque des revendications 1 à 6, 9 et 10, caractérisé en ce qu'il comprend les étapes suivantes :
   a) préparer et déposer sur un substrat au moins une couche monomoléculaire de molécules comportant chacune n fonctions polymérisables, n étant une nombre entier au moins égal à 3,et
   b) polymériser les molécules de la (des) couche(s) pour les relier chimiquement entre elles par l'intermédiaire de ces n fonctions.

18. Procédé selon la revendication 17, caractérisé en ce que les n fonctions polymérisables sont des fonctions éthyléniques.

19. Procédé selon la revendication 17, caractérisé en ce que les n fonctions polymérisables sont des fonctions acétyléniques.

20. Procédé de préparation d'une membrane selon l'une quelconque des revendications 1 à 6, 9 et 10, caractérisé en ce qu'il comprend les étapes successives suivantes :
   a) préparer une couche monomoléculaire de molécules comportant chacune n fonctions polymérisables, n étant un nombre entier au moins égal à 3,

b) polymériser les molécules de la couche pour les lier chimiquement entre elles, et
c) transférer la couche polymérisée sur un substrat.

**21.** Procédé selon l'une quelconque des revendications 17 à 20, caractérisé en ce que les molécules sont constituées d'un cation non amphiphile portant n fonctions polymérisables et d'un anion amphiphile comportant au moins une chaîne hydrophobe, et en ce que, après polymérisation des cations de la couche monomoléculaire, on élimine les anions comportant au moins une chaîne hydrophobe.

**22.** Procédé selon la revendication 21, caractérisé en ce que l'on élimine les anions en détruisant les liaisons ioniques entre ces anions et les cations non amphiphiles par action d'un acide inorganique pour remplacer ces anions par l'anion de cet acide et en dissolvant ensuite dans un solvant organique les anions amphiphiles ainsi libérés.

**23.** Procédé de préparation d'une membrane selon l'une quelconque des revendications 1, 7 et 8, caractérisé en ce qu'il comprend les étapes suivantes :
a) préparer une couche monomoléculaire de molécules amphiphiles comportant n charges positives ou négatives, n étant un nombre entier au moins égal à 3, en utilisant pour former la couche un liquide contenant en solution un ion bivalent de charge opposée à celles des molécules amphiphiles de façon à lier entre elles ces molécules par l'intermédiaire de ces ions bivalents, et
b) transférer la couche monomoléculaire ainsi constituée sur un substrat.

**24.** Procédè de préparation d'une membrane selon l'une quelconque des revendications 13 à 15, caractérisé en ce qu'il comprend les étapes suivantes :
a) former sur la surface d'un liquide une couche monomoléculaire des molécules A et des molécules B, les molécules A possédant n charges négatives et les molécules B possédant n charges positives avec n étant un nombre entier au moins égal à 3, et
b) transférer la couche ainsi formée sur un substrat.

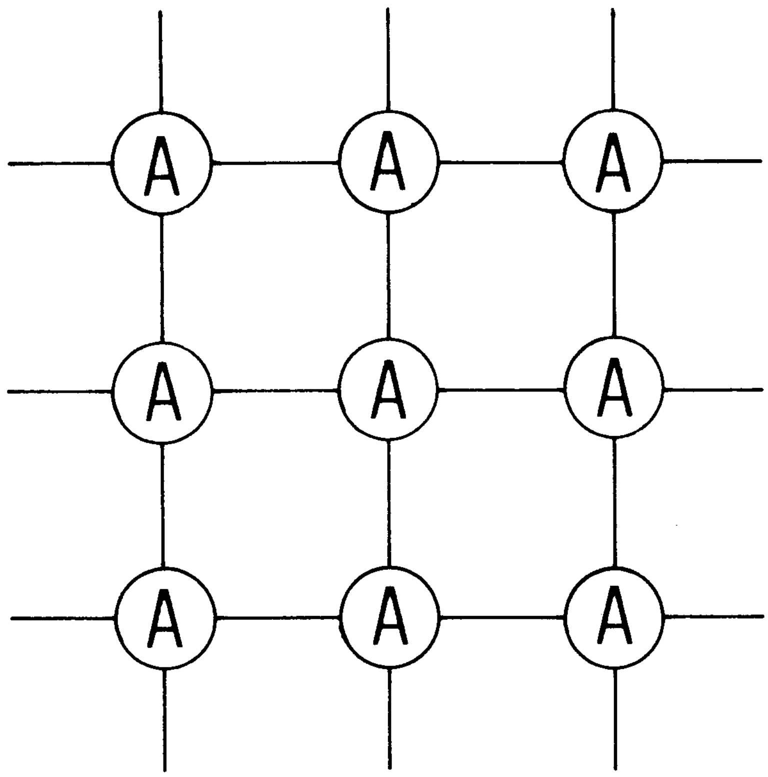


FIG. 1

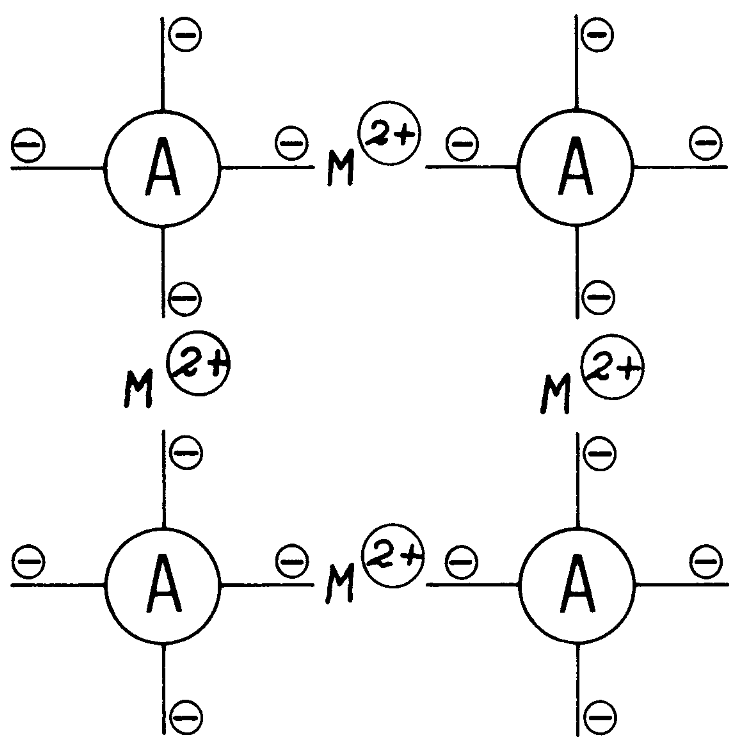


FIG. 2

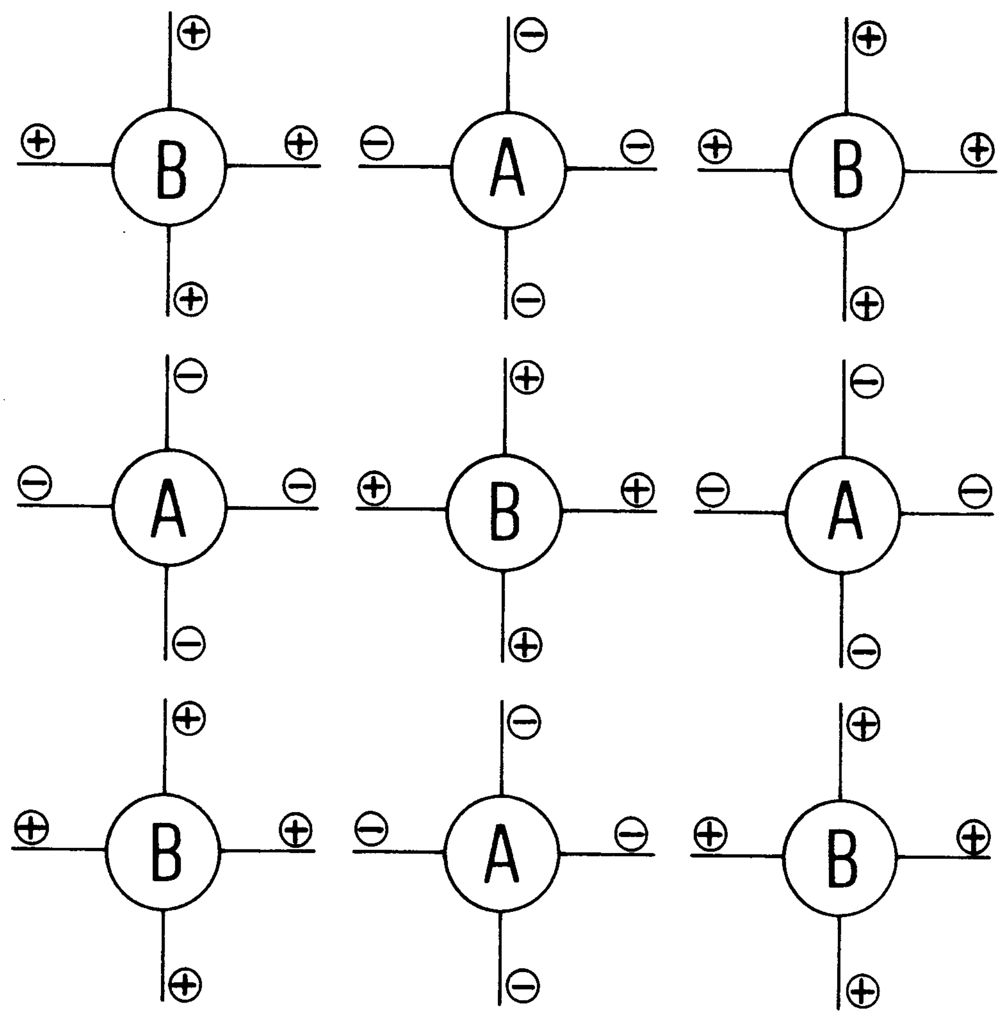


FIG. 3

FIG. 4
(II)

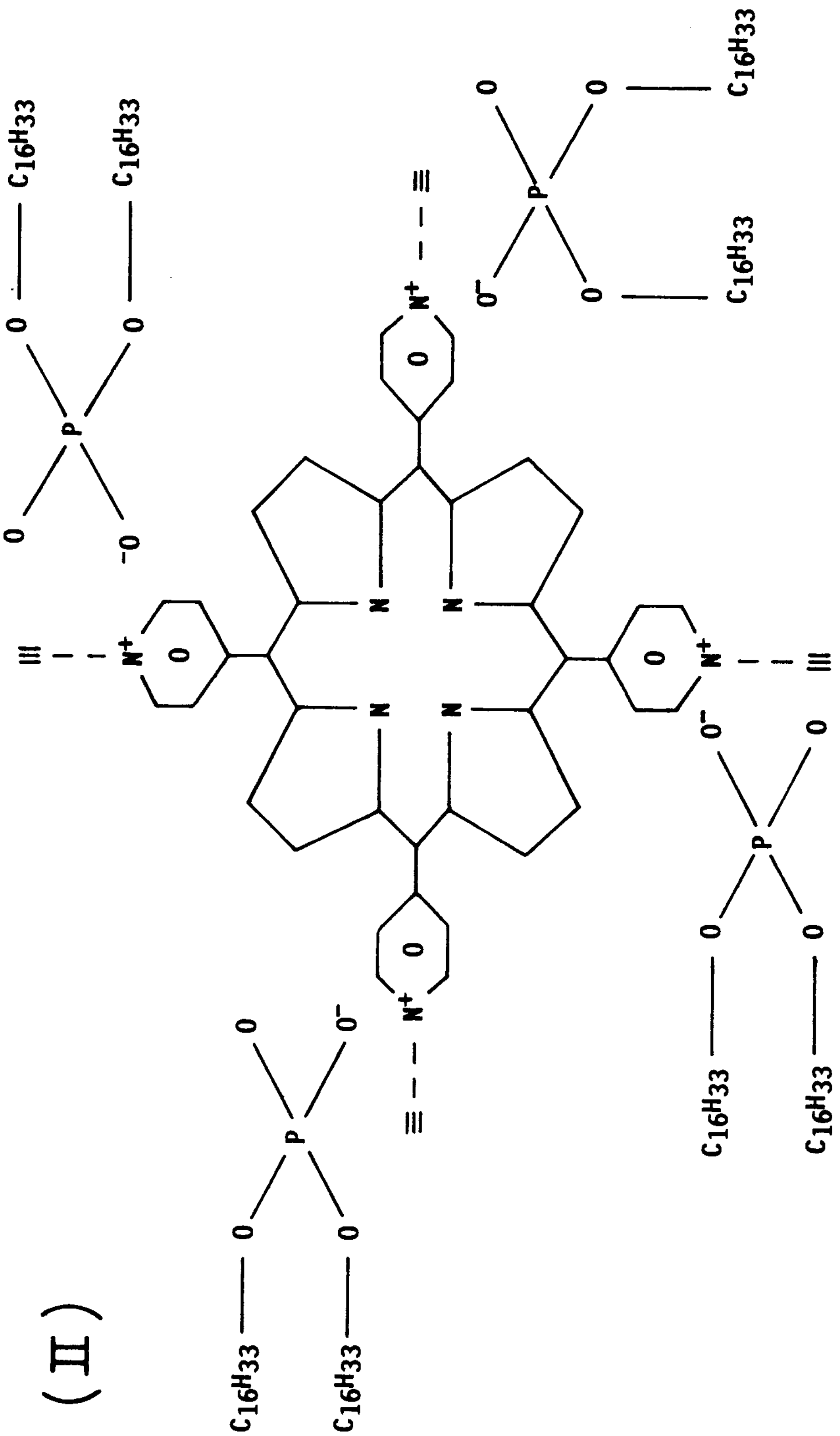

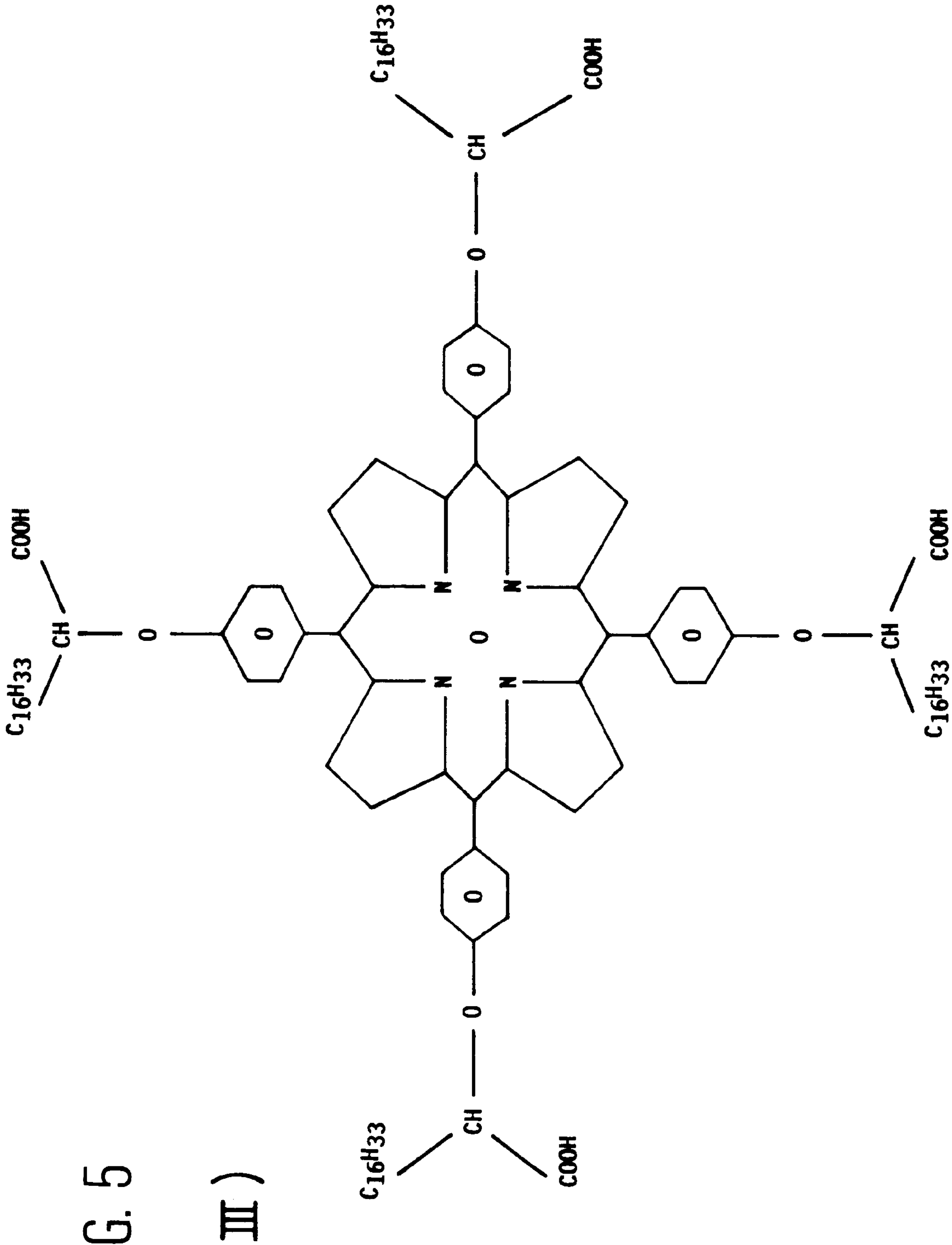

FIG. 5

(III)

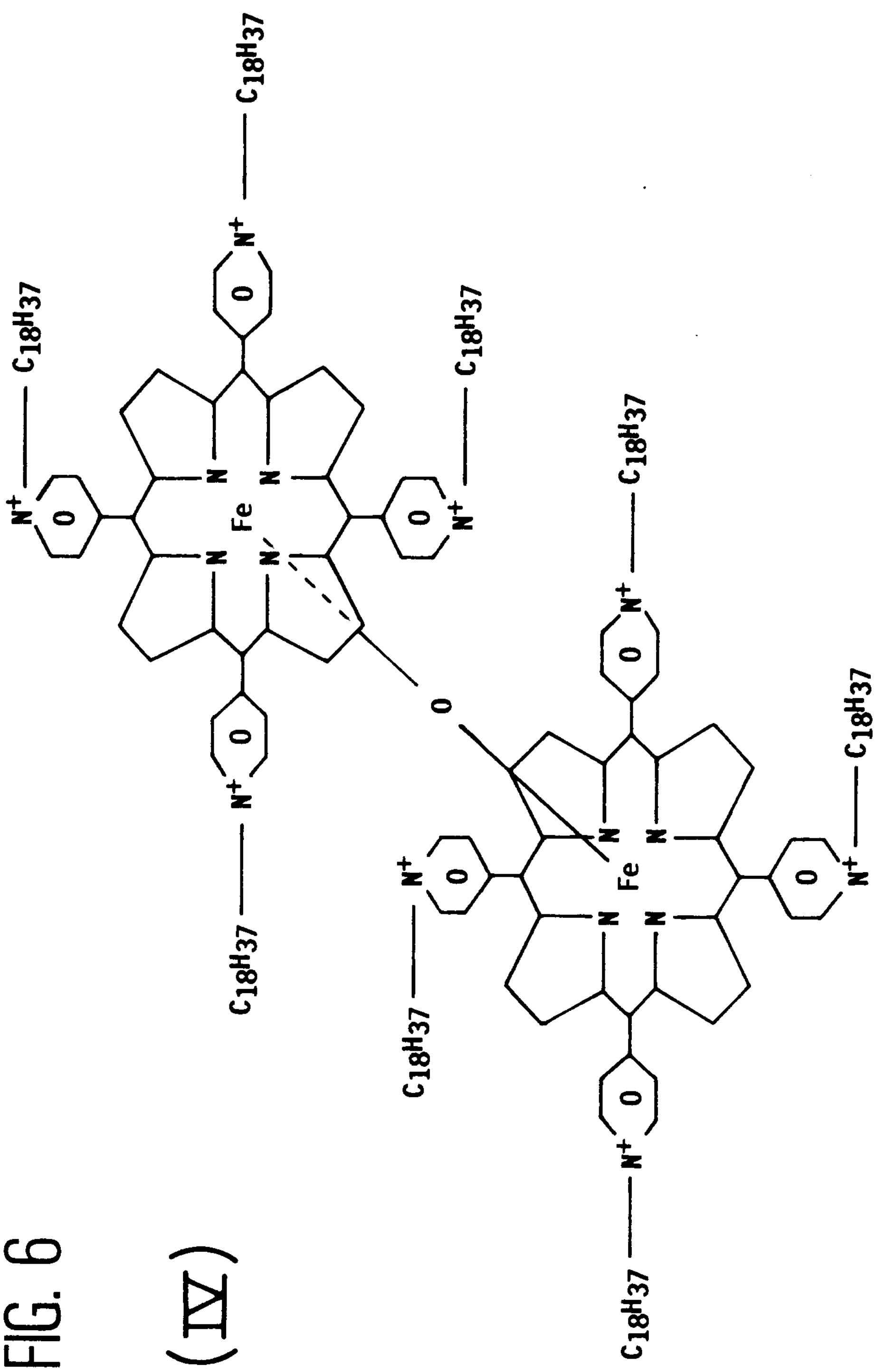

FIG. 6

(IV)

Office européen des brevets

# RAPPORT DE RECHERCHE EUROPEENNE

Numero de la demande

EP 91 40 2281

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 170 535 (COMMISSARIAT A L'ENERGIE ATOMIQUE)<br>--- | | B 05 D 1/12<br>B 01 D 69/12 |
| A | EP-A-0 246 500 (BASF)<br>--- | | |
| A | EP-A-0 334 676 (CANON K.K.)<br>* Page 8; page 9, lignes 1-30 *<br>--- | 1-10 | |
| A | THIN SOLID FILMS, vol. 133, nos. 1-4, novembre 1985, pages 83-91, Lausanne, CH; A. MILLER et al.: "Langmuir-blodgett films containing porphyrins in a well-defined environment"<br>* Page 88, paragraphe 3.2 - page 91 *<br>----- | | |
| | | | **DOMAINES TECHNIQUES RECHERCHES (Int. Cl.5)** |
| | | | B 05 D<br>B 01 D<br>C 08 J |

Le présent rapport a été établi pour toutes les revendications

| Lieu de la recherche | Date d'achèvement de la recherche | Examinateur |
|---|---|---|
| LA HAYE | 21-11-1991 | VAN GOETHEM G.A.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)